# EUROPEAN PATENT APPLICATION

(11) **EP 4 261 118 A1**
(43) Date of publication of application: **18.10.2023**
(21) Application number: 21901982.5
(22) Date of filing: 16.06.2021
(51) Int. Cl.: B63B 11/04

(54) **CONTAINER SHIP AND HIGH-CAPACITY GAS FUEL CABIN ARRANGEMENT STRUCTURE THEREOF**

(30) Priority: 10.12.2020 CN 202011431881
(71) Applicant: Hudong Zhonghua Shipbuilding (Group) Co., Ltd, Shanghai 200129 (CN)
(72) Inventor: YUAN, Hongliang, Shanghai 200129 (CN); SHEN, Ning, Shanghai 200129 (CN); YANG, Chunhua, Shanghai 200129 (CN); YAN, Huimin, Shanghai 200129 (CN); XU, Annan, Shanghai 200129 (CN); WU, Siwei, Shanghai 200129 (CN); ZHENG, Xinbin, Shanghai 200129 (CN)
(74) Representative: Zaboliene, Reda
(86) International application number: PCT/CN2021/100363
(87) International publication number: WO 2022/121270

(57) **Abstract**

The invention discloses a container ship with a large-capacity gas fuel tank arrangement structure, wherein a gas fuel tank is disposed in a middle of a ship body, a lower part of a tank body of the gas fuel tank is located in a hull, an upper part of the tank body extends out of a main deck and is placed outside, gas handling rooms and a superstructure are disposed above the gas fuel tank, containers are placed on the main deck around the gas handling rooms and at tops of the gas handling rooms; and cofferdams are disposed between the gas fuel tank and cargo tanks located on two sides of the gas fuel tank, between the gas handling rooms and the superstructure located above the gas fuel tank, and between double bottom tanks located below the gas fuel tank. The gas fuel tank is arranged across the main deck, with one part of the gas fuel tank being arranged above the main deck and the other part thereof arranged below the main deck, so that the limitation that the existing gas fuel tank is generally arranged below the main deck is broken through, the enlargement of the tank capacity of the gas fuel tank is facilitated, and the liquid cargo sloshing resistance of the whole gas fuel tank is improved.

## Description

### FIELD OF TECHNOLOGY

The invention relates to the technical field of shipbuilding, in particular to a container ship with a large-capacity gas fuel tank arrangement structure.

### BACKGROUND

With the increasingly strict requirements of the International Maritime Organization for ship emissions, the traditional ships that directly use fuel oil as fuel can no longer meet the requirements of the maritime emissions. Due to high contents of nitrogen oxides and sulfur oxides in the traditional marine fuel oil, it is costly and inefficient to reduce the emissions of harmful gases simply by improving the oil grade, which will greatly increase the fuel cost of the shipping industry. Compared with bulk cargo and liquid cargo ships, large and medium-sized container ships have larger power and fuel consumption, resulting in more and more obvious exhaust emission problem. An increasing number of shipowners choose cleaner gas fuels instead of traditional fuel oil, including natural gas, ethane gas, ammonia gas, etc. To solve this problem, the whole shipping industry is searching for the optimal gas fuel solution, including gas systems, arrangement design, etc.

Natural gas, which is sulfur-free and emits little CO2 after combustion, is widely favored by the shipping industry and will be an ideal fuel to replace traditional fuel in the future.

A dual-fuel engine, which can use both fuel and natural gas as fuel, provides shipowners with solutions featuring low emission and multiple fuels to be chosen flexibly, and is gradually favored by major shipowners.

### SUMMARY

In view of this, the invention provides a container ship with a large-capacity gas fuel tank arrangement structure, which achieve the effects that the space utilization rate of the ship is used fully by reasonable structural optimization on fuel oil tanks and a gas fuel tank, the container loading capacity is increased, the anti-sloshing ability of the large-capacity gas fuel tank is improved, and the dual-fuel endurance of fuel and gas is ensured at the same time.

A large-capacity gas fuel tank arrangement structure of a container ship includes a gas fuel tank,
the gas fuel cabin is disposed in a middle of a ship body, a lower part of a tank body of the gas fuel tank is located in a hull, an upper part of the tank body extends out of a main deck and is placed outside, gas handling rooms and a superstructure are disposed above the gas fuel tank, containers are placed on the main deck around the gas handling rooms and at tops of the gas handling rooms;
and cofferdams are disposed between the gas fuel tank and cargo tanks located on two sides of the gas fuel tank, between the gas handling rooms and the superstructure located above the gas fuel tank, and between double bottom tanks located below the gas fuel tank.

Preferably, the superstructure is located at the tops of the gas handling rooms or clamped between the gas handling rooms.

Preferably, the gas handling rooms include a gas pipeline transition room, a gas supply apparatus room and a gas supply electrical apparatus room, the gas pipeline transition room is disposed behind the gas supply apparatus room and the gas supply electrical apparatus room, or the gas pipeline transition room is disposed side by side with the gas supply apparatus room and the gas supply electrical apparatus room.

Preferably, when the gas pipeline transition room is disposed side by side with the gas supply apparatus room and the gas supply electrical apparatus room, the gas pipeline transition room is disposed between the gas supply apparatus room and the gas supply electrical apparatus room.

Preferably, a length of the gas pipeline transition room is equal to or larger than those of the gas supply apparatus room and the gas supply electrical apparatus room.

Preferably, an arrangement height of the gas pipeline transition room is equal to those of the gas supply apparatus room and the gas supply electrical apparatus room.

Preferably, a gas supply pipeline for communicating the gas fuel tank with the gas supply apparatus room is placed in the gas pipeline transition room;
a gas supply apparatus for pressurizing, gasifying and delivering a liquid fuel in the gas fuel tank to gas fuel users is placed in the gas supply apparatus room;
and a gas supply electrical apparatus is placed in the gas supply electrical apparatus room.

Preferably, the gas fuel users include a dual-fuel main engine, a gas fuel main engine, a dual-fuel power generator, a gas fuel power generator, a dual-fuel boiler and a gas boiler;
and the gas supply apparatus comprises a gas compressor, a gas evaporator and a gas heater.

Preferably, the gas supply electrical apparatus includes a gas supply system distribution board and a UPS emergency power supply.

Preferably, a safety valve and/or an isolation valve are/is mounted on the gas supply pipeline,
and the gas supply pipeline comprises a gas fuel pipe and a liquid filling pipe.

Preferably, fire-proof insulation layers are disposed on common connecting bulkheads of the cofferdams between the gas fuel tank and cargo tanks located on two sides of the gas fuel tank.

Preferably, the fire-proof insulation layers are made of fire-proof insulation materials with a fire-proof grade not lower than A60 standard.

Preferably, the cargo tanks on the two sides of the gas fuel tank are fuel oil tanks, wherein a fire fighting system apparatus room is disposed at a top of the fuel oil tank on one side, and a nitrogen generator room is disposed at a top of the fuel oil tank on the other side.

Preferably, the main deck is provided with bunker stations for arranging fuel filling pipes and auxiliary filling devices, and the bunker stations are arranged on left and right sides of a first bay of containers behind the superstructure.

Preferably, the gas fuel tank is a TYPE A, TYPE B, TYPE C or membrane liquid cargo tank specified by IMO, and the number of the gas fuel tank is at least one.

The invention has the advantages that:
1. The gas fuel tank of the invention is arranged across the main deck, with one part of the gas fuel tank being arranged above the main deck and the other part thereof being arranged below the main deck, so that the limitation that the existing gas fuel tank is generally arranged below the main deck is broken through, the arrangement height of the gas fuel tank is increased, the enlargement of the tank capacity of the gas fuel tank is facilitated, the control on the overall width of the gas fuel tank is facilitated, and the liquid cargo sloshing resistance of the whole gas fuel tank is improved.
2. By controlling the width of the gas fuel tank, additional spaces can be provided on two sides of the gas fuel tank for arranging fuel oil tanks, a cargo tank area, a fire fighting system apparatus room, a nitrogen generator room, etc., and the space utilization is maximized by reasonably optimized combination of the gas fuel tank and the functional tanks or rooms above.
3. On the premise of ensuring the same tank capacity as the existing arrangement manner, the gas fuel tank is made narrow and high by a special arrangement manner, and by narrowing the width of the fuel tank, the free liquid surface moment is reduced, the sloshing of liquid cargo in the tank is obviously reduced, the stability of the ship is improved, and the safety performance is improved.
4. By optimized arrangement of the various functional tanks and rooms, the bunker stations are arranged in a residential area built above, which not only improves the driving sight of the whole ship, but also makes it easier for a dual-fuel container ship to dock with a liquefied natural gas (LNG) filling ship.

### BRIEF DESCRIPTION OF THE DRAWINGS

In order to explain the technical solution of the embodiments of the invention more clearly, the drawings needed in the embodiments will be briefly introduced below. Apparently, the drawings described below are merely some of embodiments of the invention, and for those of ordinary skill in the art, other drawings can be obtained according to these drawings without any creative effort.
Fig. 1 is a longitudinal sectional view of embodiment 1 and embodiment 2.
Fig. 2 is a longitudinal sectional view taken along A-A in embodiment 1.
Fig. 3 is a cross-sectional view taken along C-C in the embodiment 1.
Fig. 4 is a longitudinal sectional view taken along B-B in the embodiment 1 and the embodiment 2.
Fig. 5 is a cross-sectional view taken along C-C in the embodiment 2.
Fig. 6 is a longitudinal sectional view taken along A-A in the embodiment 2 and embodiment 3.
Fig. 7 is a longitudinal sectional view of the embodiment 3 and embodiment 4.
Fig. 8 is a cross-sectional view taken along C-C in the embodiment 3.
Fig. 9 is a longitudinal sectional view taken along B-B in the embodiment 3 and the embodiment 4.
Fig. 10 is a cross-sectional view taken along C-C in the embodiment 4.

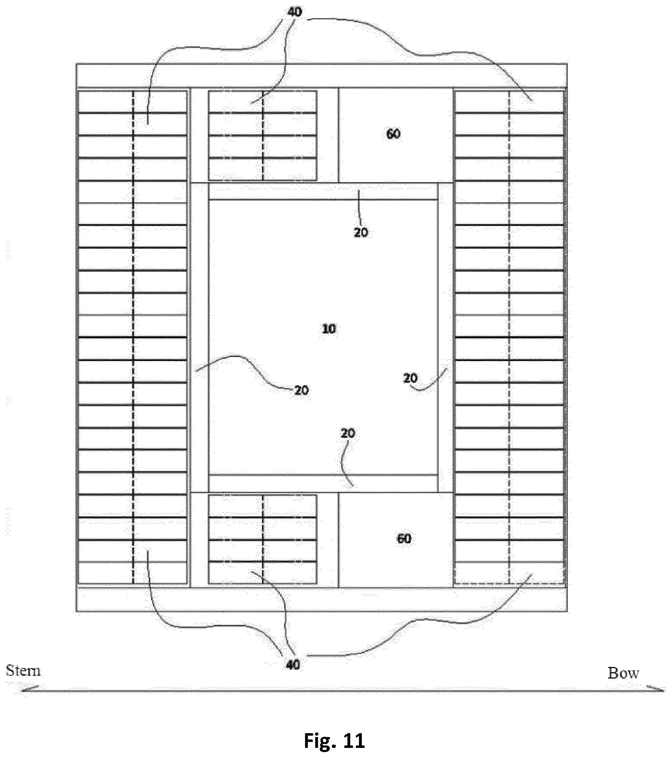

Fig. 11 is a cross-sectional view taken along D-D in Fig. 1.

The meanings of reference signs:
10. gas fuel tank;
20. cofferdam;
30. double bottom tank;
40. cargo tank;
50. side tank;
60. fuel oil tank;
70. superstructure;
80. container;
100. main deck;
110. gas pipeline transition room;
120. gas supply apparatus room;
130. gas supply electrical apparatus room;
140. fire fighting system apparatus room;
150. nitrogen generator room;
200. fire-proof insulation layer;
300. bunker station.

### DESCRIPTION OF THE EMBODIMENTS

In order to better understand the technical solution of the invention, the embodiments of the invention will be described in detail below with reference to the drawings.

It should be understood that the described embodiments are merely some, but not all, of the embodiments of the invention. All of the other embodiments, obtained by those of ordinary skill in the art based on the embodiments of the invention without any inventive efforts, fall into the protection scope of the invention.

The present application is described in further detail below by way of specific embodiments in conjunction with the following figures.

In the description of the present application, it should be understood that the terms "upper", "lower", "left", "right", and the like used in the description of the embodiments of the present application are used from the angles shown in the drawings, and should not be construed as limiting the embodiments of the present application. In addition, in this context, it will also be understood that when an element is referred to as being connected "on" or "under" another element, it can be directly connected "on" or "under" the other element or be indirectly connected "on" or "under" the other element through intervening elements.

The invention provides a large-capacity gas fuel tank arrangement structure of a container ship, which includes a gas fuel tank 10, wherein the gas fuel tank 10 is disposed in a middle of the ship body, a lower part of the tank body is located in a hull, and an upper part of the tank body extends out of a main deck 100 and is placed outside.

The main deck 100, also called an upper deck, refers to an open-air deck from a bow to a stem of the container ship.

The gas fuel tank is a TYPE A, TYPE B, TYPE C or membrane liquid cargo tank specified by IMO, and the number of the gas fuel tank is at least one.

Gas handling rooms and a superstructure 70 are disposed above the gas fuel tank 10. Containers 80 are placed on the main deck 100 around the gas handling rooms and at tops of the gas handling rooms.

Cofferdams 20 are disposed between the gas fuel tank 10 and cargo tanks 40 located on two sides of the gas fuel tank, between the gas handling rooms and the superstructure 70 located above the gas fuel tank, and between double bottom tanks 30 located below the gas fuel tank, that is, the periphery of the gas fuel tank 10 is separated from its adjacent tanks or places by the cofferdams 20.

Preferably, fire-proof insulation layers 200 are disposed on common connecting bulkheads of the cofferdams 20 between the gas fuel tank 10 and the cargo tanks 40 located on two sides of the gas fuel tank The fire-proof insulation layers 200 are made of fire-proof insulation materials with a fire-proof grade not lower than A60 standard.

The cargo tank 40 is disposed in the hull and is specially used for loading containers. Cargo tanks 40 on the two sides of the gas fuel tank 10 can also be provided as fuel oil tanks 60, wherein a fire fighting system apparatus room 140 is disposed at a top of the fuel oil tank on one side, and a nitrogen generator room 150 is disposed at a top of the fuel oil tank on the other side. The fire fighting system apparatus rooms 140 are used to store a fire fighting apparatus and fire fighting media which are not limited to CO2, NOVEC1230, water mist, etc. The fire fighting system apparatus rooms 140 are arranged below the main deck 100, on the two sides of the gas fuel tank 10, and on the fuel oil tanks 60. The nitrogen generator rooms 150 are used for storing a nitrogen generation device and generating nitrogen for inerting the gas fuel tank 10, and are arranged below the main deck 100, on the two sides of the gas fuel tank 10, and on the fuel oil tanks 60.

The double bottom tank 30, which is made of watertight steel enclosure bulkheads and can be an empty tank or a ballast tank, is arranged at the bottom of the ship.

The superstructure 70 mainly includes crew accommodations, office accommodations, a cab, etc. The superstructure 70 is located at the tops of the gas handling rooms or clamped between the gas handling rooms.

The gas handling rooms include a gas pipeline transition room 110, a gas supply apparatus room 120 and a gas supply electrical apparatus room 130.

A gas supply pipeline for communicating the gas fuel tank 10 with the gas supply apparatus room 120 is placed in the gas pipeline transition room 110, the gas supply pipeline includes a gas fuel pipe and a liquid filling pipe, and a safety valve and/or an isolation valve are/is mounted on the gas supply pipeline. The gas pipeline transition room 110 is arranged at a position close to the middle of the ship.
and a gas supply apparatus for pressurizing, gasifying and delivering a liquid fuel in the gas fuel tank 10 to gas fuel users is placed in the gas supply apparatus room 120_{∘} The gas fuel users comprise a dual-fuel main engine, a gas fuel main engine, a dual-fuel power generator, a gas fuel power generator, a dual-fuel boiler, a gas boiler, etc., and the gas supply apparatus comprises a gas compressor, a gas evaporator, a gas heater, etc.

A gas supply electrical apparatus is placed in the gas supply electrical apparatus room 130, and the gas supply electrical apparatus 130 includes a gas supply system distribution board and a UPS emergency power supply.

Preferably, the main deck 100 is provided with bunker stations 300 for arranging fuel filling pipes and auxiliary filling devices, and the bunker stations 300 are arranged on left and right sides of a first bay of containers behind the superstructure 70.

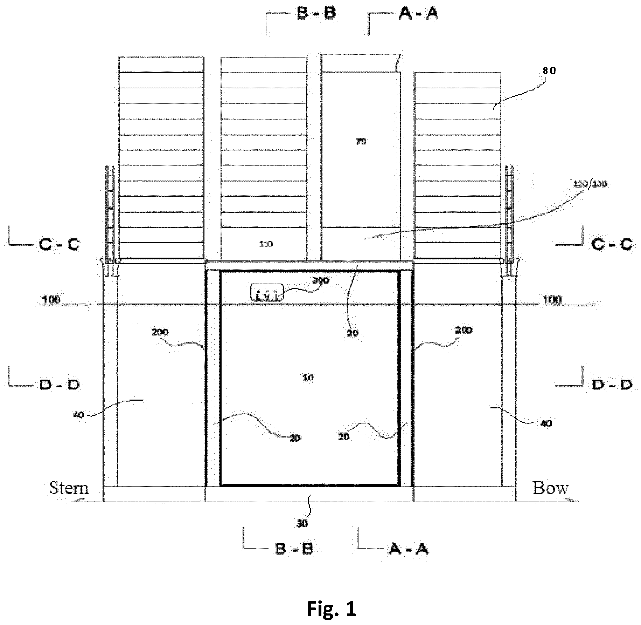

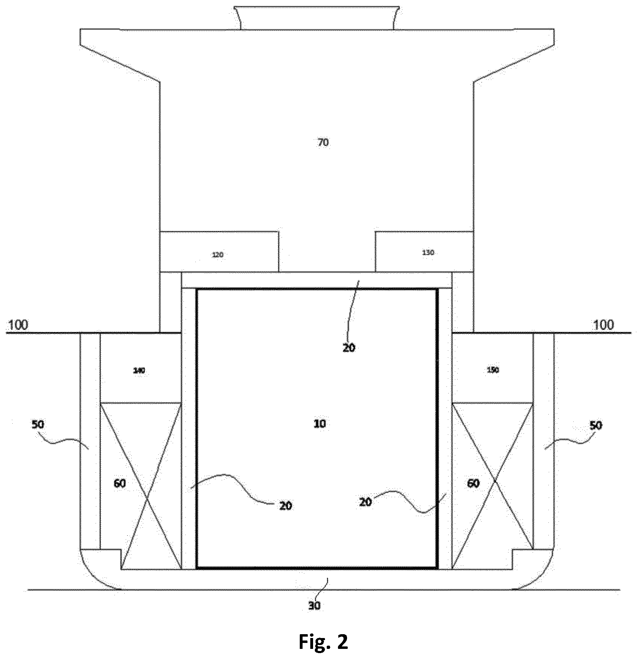

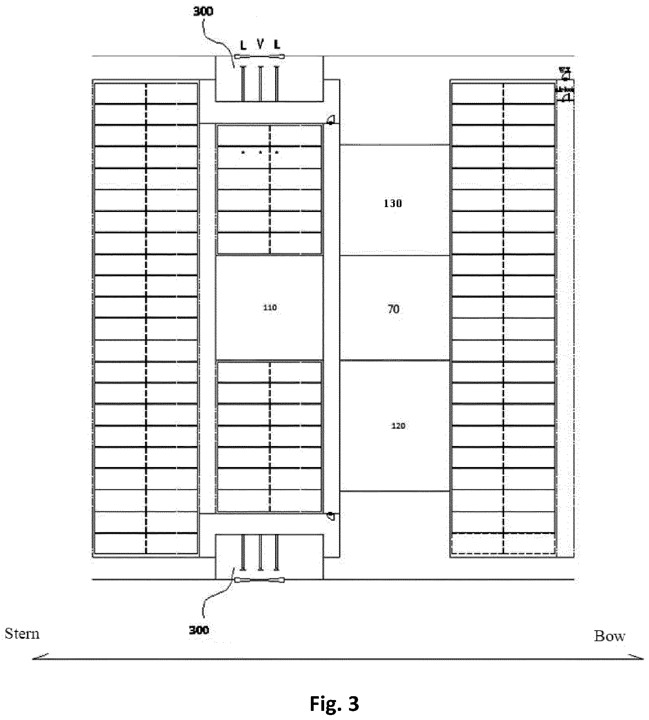

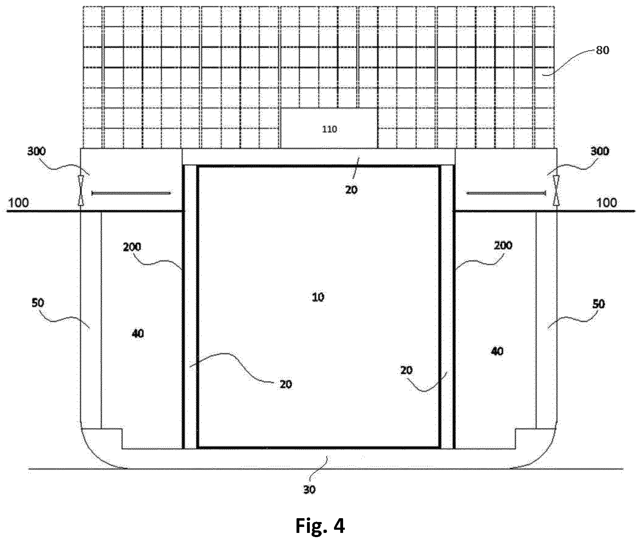

Embodiment 1, as shown in Figs. 1, 2, 3 and 4, the large-capacity gas fuel tank arrangement structure of the container ship in this embodiment includes a gas fuel tank 10, wherein the gas fuel tank 10 is disposed in a middle of a ship body, a lower part of the tank body is located in a hull, an upper part of the tank body extends out of a main deck 100 and is placed outside, gas handling rooms and a superstructure 70 are disposed above the gas fuel tank 10, and the superstructure 70 is clamped between the gas handling rooms. Containers 80 are placed on the main deck 100 around the gas handling rooms and at tops of the gas handling rooms.

Specifically, the gas pipeline transition room 110 is disposed behind the gas supply apparatus room 120 and the gas supply electrical apparatus room 130, and the arrangement height of the gas pipeline transition room 110 is equal to those of the gas supply apparatus room 120 and the gas supply electrical apparatus room 130. The superstructure 70 is clamped between the gas supply apparatus room 120 and the gas supply electrical apparatus room 130.

Cofferdams 20 are disposed between the gas fuel tank 10 and cargo tanks 40 located on two sides of the gas fuel tank, between the gas handling rooms and the superstructure 70 located above the gas fuel tank, and between double bottom tanks 30 located below the gas fuel tank.

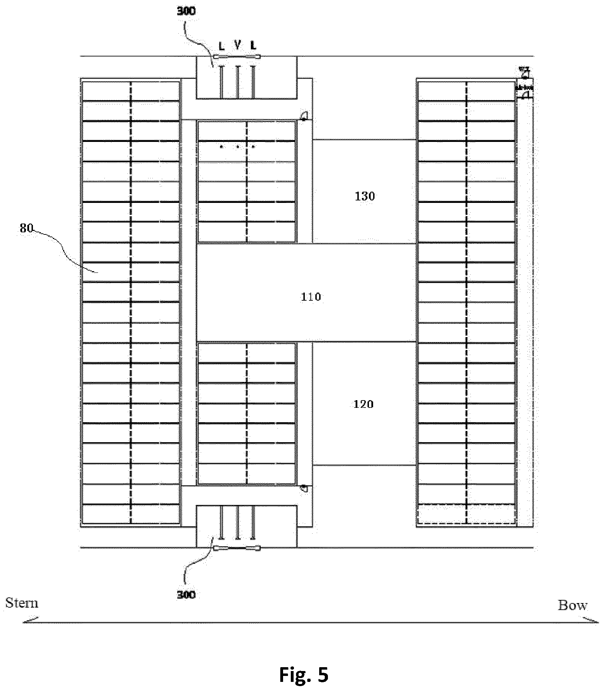

Embodiment 2, as shown in Figs. 1, 4, 5 and 6, the large-capacity gas fuel tank arrangement structure of the container ship in this embodiment includes a gas fuel tank 10, wherein the gas fuel tank 10 is disposed in a middle of a ship body, a lower part of the tank body is located in a hull, an upper part of the tank body extends out of a main deck 100 and is placed outside, gas handling rooms and a superstructure 70 are disposed above the gas fuel tank 10, and the superstructure 70 is located at tops of the gas handling rooms. Containers 80 are placed on the main deck 100 around the gas handling rooms and at tops of the gas handling rooms.

Specifically, the gas pipeline transition room 110 is disposed side by side with the gas supply apparatus room 120 and the gas supply electrical apparatus room 130, and the gas pipeline transition room 110 is disposed between the gas supply apparatus room 120 and the gas supply electrical apparatus room 130, and the arrangement height of the gas pipeline transition room 110 is equal to those of the gas supply apparatus room 120 and the gas supply electrical apparatus room 130. The superstructure 70 is located at the tops of the gas pipeline transition room 110, the gas supply apparatus room 120 and the gas supply electrical apparatus room 130.

In this embodiment, a length of the gas pipeline transition room 110 is larger than those of the gas supply apparatus room 120 and the gas supply electrical apparatus room 130, and a front end of the gas pipeline transition room 110 is aligned with the gas supply apparatus room 120 and the gas supply electrical apparatus room 130.

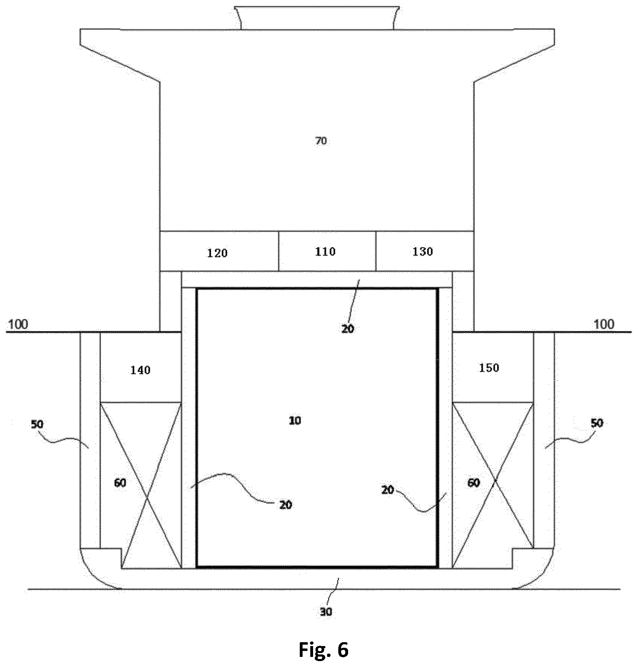

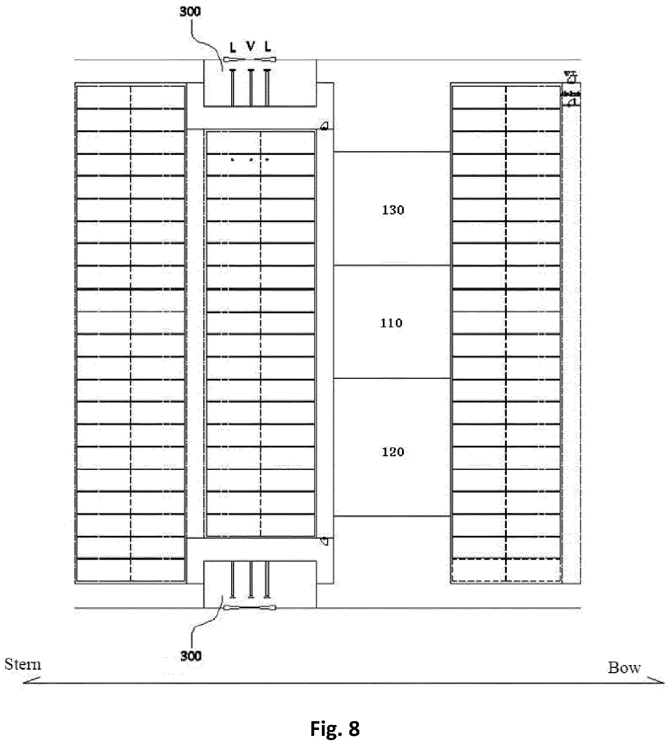

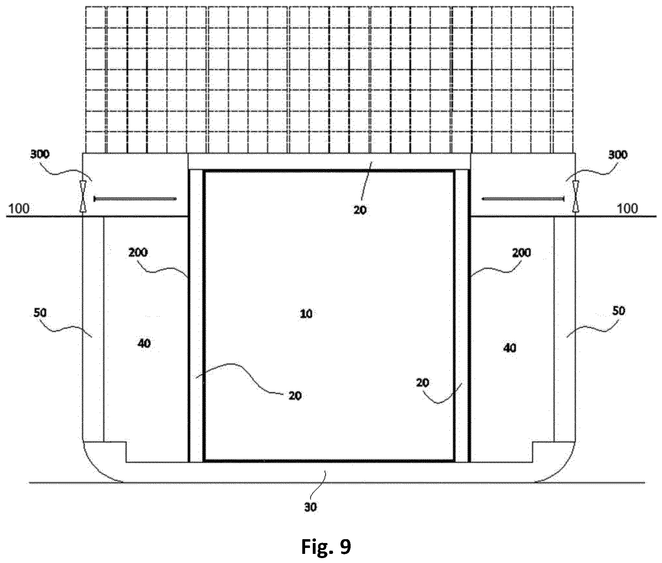

Embodiment 3, as shown in Figs. 6, 7, 8 and 9, the large-capacity gas fuel tank arrangement structure of the container ship in this embodiment includes a gas fuel tank 10, wherein the gas fuel tank 10 is disposed in a middle of a ship body, a lower part of the tank body is located in a hull, an upper part of the tank body extends out of a main deck 100 and is placed outside, gas handling rooms and a superstructure 70 are disposed above the gas fuel tank 10, and the superstructure 70 is located at tops of the gas handling rooms. Containers 80 are placed on the main deck 100 around the gas handling rooms.

Specifically, the gas pipeline transition room 110 is disposed side by side with the gas supply apparatus room 120 and the gas supply electrical apparatus room 130, and the gas pipeline transition room 110 is disposed between the gas supply apparatus room 120 and the gas supply electrical apparatus room 130, and the arrangement height of the gas pipeline transition room 110 is equal to those of the gas supply apparatus room 120 and the gas supply electrical apparatus room 130. The superstructure 70 is located at the tops of the gas pipeline transition room 110, the gas supply apparatus room 120 and the gas supply electrical apparatus room 130.

In this embodiment, the length of the gas pipeline transition room 110 is equal to those of the gas supply apparatus room 120 and the gas supply electrical apparatus room 130.

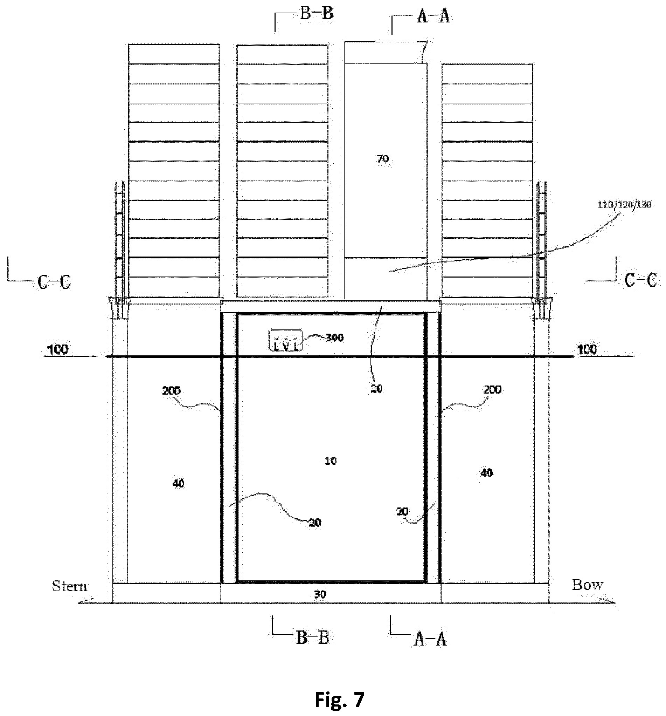

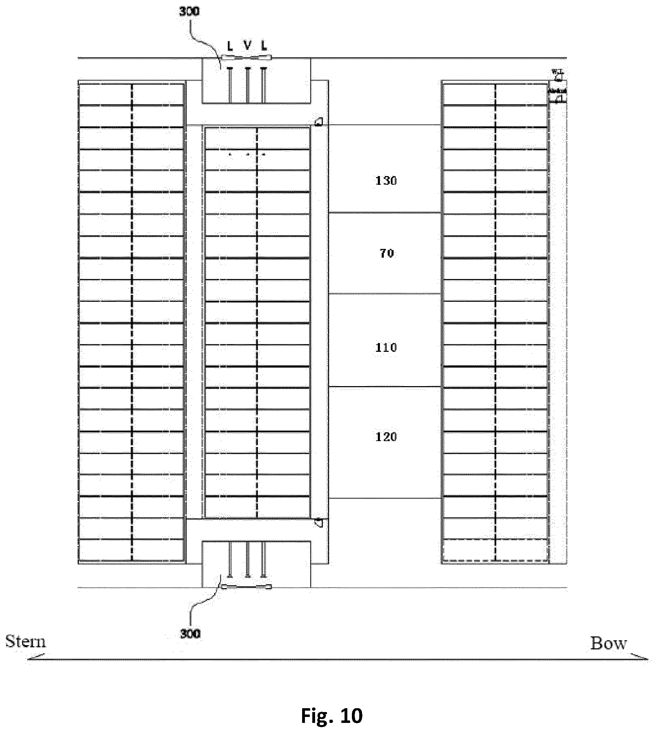

Embodiment 4, as shown in Figs. 7, 9 and 10, the large-capacity gas fuel tank arrangement structure of the container ship in this embodiment includes a gas fuel tank 10, wherein the gas fuel tank 10 is disposed in a middle of a ship body, a lower part of the tank body is located in a hull, an upper part of the tank body extends out of a main deck 100 and is placed outside, gas handling rooms and a superstructure 70 are disposed above the gas fuel tank 10, and the superstructure 70 is clamped between the gas handling rooms. Containers 80 are placed on the main deck 100 around the gas handling rooms.

Specifically, the gas pipeline transition room 110 is disposed side by side with the gas supply apparatus room 120 and the gas supply electrical apparatus room 130, and the gas pipeline transition room 110 is disposed between the gas supply apparatus room 120 and the gas supply electrical apparatus room 130, and the arrangement height of the gas pipeline transition room 110 is equal to those of the gas supply apparatus room 120 and the gas supply electrical apparatus room 130. The superstructure 70 can be clamped between the gas pipeline transition room 110 and the gas supply apparatus room 120, or between the gas pipeline transition room 110 and the gas supply electrical apparatus room 130.

In this embodiment, the length of the gas pipeline transition room 110 is equal to those of the gas supply apparatus room 120 and the gas supply electrical apparatus room 130.

The embodiments described above are only preferred embodiments of the present invention and should not be taken as limiting the scope of the present invention. Any modifications, equivalents, improvements and the like made within the spirit and principle of the present invention should be included in the scope of the present invention.

## Claims

1. A large-capacity gas fuel tank arrangement structure of a container ship, **characterized by** comprising a gas fuel tank, wherein the gas fuel tank is a TYPE B tank or a membrane liquid cargo tank, and the number of the gas fuel tank is at least one;
the gas fuel cabin is disposed in a middle of a ship body, a lower part of a tank body of the gas fuel tank is located in a hull, an upper part of the tank body extends out of a main deck and is placed outside, gas handling rooms and a superstructure are disposed above the gas fuel tank, containers are placed on the main deck around the gas handling rooms and at tops of the gas handling rooms;
and cofferdams are disposed between the gas fuel tank and cargo tanks located on two sides of the gas fuel tank, between the gas handling rooms and the superstructure located above the gas fuel tank, and between double bottom tanks located below the gas fuel tank.

2. The large-capacity gas fuel tank arrangement structure of the container ship according to claim 1, **characterized in that** the superstructure is located at the tops of the gas handling rooms or clamped between the gas handling rooms.

3. The large-capacity gas fuel tank arrangement structure of the container ship according to claim 2, **characterized in that** the gas handling rooms comprise a gas pipeline transition room, a gas supply apparatus room and a gas supply electrical apparatus room, the gas pipeline transition room is disposed behind the gas supply apparatus room and the gas supply electrical apparatus room, or the gas pipeline transition room is disposed side by side with the gas supply apparatus room and the gas supply electrical apparatus room.

4. The large-capacity gas fuel tank arrangement structure of the container ship according to claim 3, **characterized in that** when the gas pipeline transition room is disposed side by side with the gas supply apparatus room and the gas supply electrical apparatus room, the gas pipeline transition room is disposed between the gas supply apparatus room and the gas supply electrical apparatus room.

5. The large-capacity gas fuel tank arrangement structure of the container ship according to claim 4, **characterized in that** a length of the gas pipeline transition room is equal to or larger than those of the gas supply apparatus room and the gas supply electrical apparatus room.

6. The large-capacity gas fuel tank arrangement structure of the container ship according to claim 3 or 4 or 5, **characterized in that** an arrangement height of the gas pipeline transition room is equal to those of the gas supply apparatus room and the gas supply electrical apparatus room.

7. The large-capacity gas fuel tank arrangement structure of the container ship according to claim 6, **characterized in that** a gas supply pipeline for communicating the gas fuel tank with the gas supply apparatus room is placed in the gas pipeline transition room;
a gas supply apparatus for pressurizing, gasifying and delivering a liquid fuel in the gas fuel tank to gas fuel users is placed in the gas supply apparatus room;
and a gas supply electrical apparatus is placed in the gas supply electrical apparatus room.

8. The large-capacity gas fuel tank arrangement structure of the container ship according to claim 7, **characterized in that** the gas fuel users comprise a dual-fuel main engine, a gas fuel main engine, a dual-fuel power generator, a gas fuel power generator, a dual-fuel boiler and a gas boiler;
and the gas supply apparatus comprises a gas compressor, a gas evaporator and a gas heater.

9. The large-capacity gas fuel tank arrangement structure of the container ship according to claim 7, **characterized in that** the gas supply electrical apparatus comprises a gas supply system distribution board and a UPS emergency power supply.

10. The large-capacity gas fuel tank arrangement structure of the container ship according to claim 7, **characterized in** a safety valve and/or an isolation valve are/is mounted on the gas supply pipeline,
and the gas supply pipeline comprises a gas fuel pipe and a liquid filling pipe.

11. The large-capacity gas fuel tank arrangement structure of the container ship according to claim 1, **characterized in that** fire-proof insulation layers are disposed on common connecting bulkheads of the cofferdams between the gas fuel tank and cargo tanks located on two sides of the gas fuel tank.

12. The large-capacity gas fuel tank arrangement structure of the container ship according to claim 11, **characterized in that** the fire-proof insulation layers are made of fire-proof insulation materials with a fire-proof grade not lower than A60 standard.

13. The large-capacity gas fuel tank arrangement structure of the container ship according to claim 11, **characterized in that** the cargo tanks on the two sides of the gas fuel tank are fuel oil tanks, wherein a fire fighting system apparatus room is disposed at a top of the fuel oil tank on one side, and a nitrogen generator room is arranged at a top of the fuel oil tank on the other side.

14. The large-capacity gas fuel tank arrangement structure of the container ship according to claim 1, **characterized in that** the main deck is provided with bunker stations for arranging fuel filling pipes and auxiliary filling devices, and the bunker stations are arranged on left and right sides of a first bay of containers behind the superstructure.

15. The large-capacity gas fuel tank arrangement structure of the container ship according to claim 1, **characterized in that** the gas fuel tank is a TYPE A or TYPE C liquid cargo tank specified by IMO, and the number of the gas fuel tank is at least one.

16. A container ship, **characterized by** comprising the large-capacity gas fuel tank arrangement structure of container ship according to any one of claims 1-15.
